# EUROPÄISCHE PATENTANMELDUNG

(11) **EP 2 158 829 A1**
(43) Veröffentlichungstag der Anmeldung: **03.03.2010**
(21) Anmeldenummer: 09405123.2
(22) Anmeldetag: 23.07.2009
(51) Int. Cl.: A47J 31/44

(54) **Anordnung und Verfahren zur Trennung von Inhalt und Verpackung einer Kapsel**

(30) Priorität: 28.08.2008 CH 13792008
(71) Anmelder: Insent GmbH, 6300 Zug (CH)
(72) Erfinder: Suter, Jürg, 8004 Zürich (CH); Zobrist, Beat, 8045 Zürich (CH); Villiger, Stephan, 8057 Zürich (CH)

(57) **Zusammenfassung**

Zur Trennung des Inhalts von der Verpackung bei verbrauchten Kapseln (10) zur Getränkezubereitung, insbesondere Kaffee enthaltenden Kapseln aus Metall, wird vorzugsweise eine Anordnung (1) bzw. eine Presse verwendet, die insbesondere eine Handpresse ist, durch welche die Kapsel zusammenquetschbar ist, so dass deren Inhalt auf der Extraktionsseite der Kapsel austritt, wo er aufgefangen und separat von der Kapsel entsorgt werden kann.

## Beschreibung

### Hintergrund

Die Erfindung betrifft eine Anordnung und ein Verfahren zur Trennung des Inhalts und der Verpackung von gebrauchten Kapseln zur Getränkeherstellung. Ferner betrifft die Erfindung eine Verwendung einer Presse sowie eine Kaffeemaschine.

### Stand der Technik

Es ist bekannt, für die Getränkezubereitung, insbesondere die Kaffeezubereitung, Kapseln zu verwenden, die einen durch Wasser extrahierbaren Inhalt enthalten, also insbesondere gemahlenen Kaffee, der nach dem Gebrauch der Kapsel, bzw. der Herstellung des Getränks, mindestens teilweise in der Kapsel verbleibt. Die Kapseln können aus Metall bestehen, was besonders für die Frischhaltung von darin befindlichem gemahlenem Kaffee vorteilhaft ist. Solche Kapseln sind z.B. unter der Marke Nespresso^{®} bekannt. Die Ausführung der Kapsel aus Metall macht eine Wiederverwertung dieses Stoffes wünschbar, der in der gebrauchten Kapsel nach Herstellung des Getränks verbleibende Inhaltsstoff kann aber für die Wiederverwertung des Metalls störend sein. Die Hersteller solcher Kapseln bieten daher Recyclingsammelstellen und ein zentrales Recycling an, bei welchem eine grosse Zahl von Kapseln gleichzeitig zerkleinert wird und Metall und Kaffeesatz durch bekannte Verfahrensschritte, wie Sieben, getrennt werden.

### Darstellung der Erfindung

Es ist Aufgabe der Erfindung eine weitere Möglichkeit für Verwender von Kapseln zu schaffen, diese nach Gebrauch der Wiederverwertung zuzuführen.

Diese Aufgabe wird mit einer Anordnung gemäss Anspruch 1 gelöst.

Dadurch, dass die Anordnung zur Trennung von Kapselmaterial, bzw. der Verpackung, vom Inhalt der Kapsel dafür bestimmt und so ausgeführt ist, dass die Trennung für jede einzelne Kapsel separat bzw. einzelstückweise erfolgt, wobei auch mehrere Kapseln zugleich aber jeweils einzeln für sich trennbar sein können, kann die Trennung einzelner Kapseln in Verpackung und Inhalt nach deren Gebrauch vom Verwender, insbesondere im Heim- oder Bürogebrauch, einfach durchgeführt werden. Die Verpackung kann dann auf bekanntem Weg dem Metallrecycling zugeführt und der Inhalt kann separat entsorgt werden, im Falle von Kaffeesatz z.B. auch kompostiert werden. Die Anordnung erlaubt die Ausgestaltung als separates, händisch zu betätigendes Gerät für den Heim- und Bürobereich oder den Einbau in die das Getränk herstellende Vorrichtung, also insbesondere in eine Kaffeemaschine. Die Anordnung ist zur mindestens teilweisen Zerstörung der Kapsel ausgeführt bzw. bestimmt, um dadurch den Inhalt vom Kapselmaterial trennen zu können. Unter mindestens teilweiser Zerstörung wird dabei insbesondere ein Zusammendrücken oder Zusammenquetschen, ein Aufschneiden oder Aufstechen wenigstens eines Teils der Kapsel verstanden.

Bei einer ersten bevorzugten Ausgestaltung der Anordnung ist diese so ausgeführt, dass die Kapsel über einer Öffnung der Anordnung durch ein Quetschmittel mindestens teilweise zusammengepresst wird, wodurch der Inhalt der Kapsel durch die Öffnung hindurch austritt, so dass sich eine Trennung von Kapsel und Inhalt ergibt. Dies kann auf verschiedene Weise für händische oder motorische Betätigung ausgeführt werden und sowohl als separate Anordnung als auch als Anordnung innerhalb einer Maschine zur Getränkeherstellung, insbesondere einer Kaffeemaschine. Bei einer bevorzugten Anordnung ist eine Basis vorgesehen, welche eine Aufnahme aufweist, die zum Halten der Kapsel in vorbestimmter Position über der Öffnung bestimmt ist, sowie ein oberhalb der Basis angeordnetes Quetschmittel, durch welches die Quetschkraft auf eine auf der Basis in Position befindliche Kapsel ausgeübt werden kann. Auch diese Ausführung eignet sich für ein einfaches Handgerät und kann auch die Grundlage für eine Anordnung in einer Kaffeemaschine bilden. Bevorzugt ist die Öffnung so angeordnet bzw. dimensioniert dass die Kapsel nur entlang ihres Randes in der Aufnahme gehalten ist. Dies ergibt ein möglichst gutes Entleeren der Kapsel. Es hat sich gezeigt, dass es vorteilhaft ist, die Öffnung mit sich zur Kapsel hin konisch erweiternd verlaufender Seitenwand auszuführen, was das Entnehmen der zerstörten, insbesondere zerquetschten Kapsel erleichtert.

Bei einer bevorzugten Ausführung ist das Quetschmittel um eine Achse schwenkbar und ist insbesondere schwenkbar an der Basis angeordnet, was ebenfalls einen einfachen Aufbau ergibt, besonders wenn das Quetschmittel an einem einstückig mit der Basis gebildeten Arm angeordnet oder von diesem gebildet ist. Besonders bevorzugt ist es, wenn das Quetschmittel einen Quetschkörper aufweist, der im Wesentlichen aus einem Teil eines Rotationskörpers gebildet ist. Insbesondere kann der Quetschkörper aus einem Teil eines Paraboloids gebildet sein. Der Quetschkörper ist in solchen Ausführungen insbesondere dazu bestimmt bzw. ausgebildet, eine z.B. rundliche Vertiefung in die Kapsel zu quetschen, und insbesondere dazu bestimmt bzw. entsprechend dimensioniert, eine kraterförmige Vertiefung in der Kapsel zu bilden, wobei deren Seitenwände als Kraterwände teilweise unverformt bleiben. Es hat sich gezeigt, dass mit einem solchen Eindrücken der Kapselrückseite in die Kapsel hinein und dabei mindestens teilweisem Stehenlassen der Seitenwand der Kapsel eine genügend gute Entleerung einer Kapsel bei geringem Kraftaufwand möglich ist. Besonders geeignet ist dies zum Beispiel für Nespresso^{®} Kapseln, die von der Wassereinlassseite her mit dem Quetschkörper beaufschlagt werden. Der Kraftaufwand ist dabei insbesondere bei einer Anordnung zu beachten, die händisch betätigt wird und bei der aus Platzgründen und für eine einfache Konstruktion nur ein geringer Hebel für die Handkraft zur Verfügung gestellt wird und insbesondere auch, wenn die Anordnung zur Aufnahme von mehr als einer Kapsel gleichzeitig ausgebildet ist, insbesondere für zwei Kapseln. Entsprechend der zur Verfügung stehenden Kraft kann auch ein im Wesentlichen vollständiges Zusammenquetschen der Kapsel erfolgen und der Quetschkörper kann auch anders geformt sein und z.B. nur von einem ebenen, plattenförmigen Teil gebildet sein.

Bei einer Ausführungsform ist an der Basis, und insbesondere an der Aufnahme, ein Schneidmittel vorgesehen, welches zur Bildung eines teilweisen oder gänzlich umlaufenden Schnittes in der Kapsel bestimmt ist, was das Zusammenpressen und die Entleerung fördern kann. Bei einer Ausführung kann das Quetschmittel mindestens ein Positionierungselement aufweisen, welches dazu bestimmt ist, die Position von Kapsel und Quetschmittel aneinander anzupassen bzw. ein Ausweichen der Kapsel bei der Quetschung zu vermeiden. Bei einer bevorzugten Ausführungsform ist eine Entnahmehilfe für die zerstörte Kapsel vorgesehen, insbesondere in Kombination mit der Öffnung mit konischer Seitenwand. Die Entnahmehilfe kann als Federmittel ausgestaltet sein, welches die zerstörte Kapsel aus ihrer Aufnahme drückt und/oder das Entnahmemittel kann als Ausnehmung vorgesehen sein, welche das Herausnehmen der zerstörten Kapsel aus der Aufnahme erleichtert.

Für eine einfache Bedienung einer von Hand zu betätigenden Anordnung kann diese eine Stellfläche zur Positionierung auf einer Unterlage aufweisen, wobei die Öffnung beabstandet von der Stellfläche angeordnet ist, insbesondere unter Bildung eines Auffangraums, insbesondere eines Behälters, zur Aufnahme des Inhaltes mindestens einer Kapsel. Der Behälter ist vorzugsweise verschliessbar. Ferner kann die Anordnung, z.B. beim Gelenk zwischen Basis und Quetschmittel, eine Öffnung aufweisen, welche ein Aufhängen der Anordnung an einem Haken zu deren Aufbewahrung während des Nichtgebrauchs erlaubt.

Anstelle der bevorzugten Quetschung der Kapsel kann die Trennung von Verpackung und Inhalt z.B. auch durch ein Herausziehen des Inhalts mittels eines schraubenförmigen Fördermittels und/oder durch ein Schlag- oder Vibrationsmittel oder durch ein Spülmittel zum Herausspülen des Inhalts durch Wasser oder durch ein Blas- und/oder Saugmittel bewirkt werden. Alle Ausführungsformen der Erfindung können als separate Anordnungen ausgebildet sein oder in einer Getränkezubereitungsmaschine, insbesondere einer Kaffeemaschine, angeordnet sein.

Die Erfindung betrifft somit auch eine Kaffeemaschine mit einer Anordnung zur Trennung von Verpackung und Inhalt einer gebrauchten Kapsel.

Die Aufgabe wird weiter dadurch gelöst, dass eine Presse gemäss Anspruch 18 zur Trennung von Verpackung und Inhalt verwendet wird.

Weiter wird die Aufgabe mit dem Verfahren nach Anspruch 22 oder Anspruch 26 gelöst.

### Kurze Beschreibung der Zeichnungen

Im Folgenden werden Ausführungsbeispiele der Erfindung anhand der Zeichnungen näher erläutert. Dabei zeigt
Figur 1 eine schaubildliche Ansicht einer Ausführungsform einer erfindungsgemässen Anordnung;
Figur 2 eine Seitenansicht der Anordnung von Figur 1;
Figur 3 eine schaubildliche Ansicht einer weiteren Ausführungsform der Anordnung;
Figur 4 eine Seitenansicht der Anordnung gemäss Figur 3;
Figur 5 eine schaubildliche Ansicht auf ein Beispiel der Anordnung mit Schneidmittel;
Figur 6 eine Vertikalschnittansicht der Anordnung von Figur 5;
Figur 7 eine schaubildliche Ansicht einer Ausführung mit Entnahmehilfe;
Figur 8 eine Vertikalschnittansicht der Ausführung von Figur 7;
Figur 9 eine schaubildliche Ansicht einer Ausführung mit Positionierungsmitteln am Quetschkörper;
Figur 10 eine weitere Ausführung in Seitenansicht;
Figur 11 eine weitere Ausführung in schaubildlicher Ansicht;
Figur 12 eine weitere Ausführung in schaubildlicher Ansicht;
Figur 13 die Ausführung von Figur 12 in Vertikalschnittansicht;
Figur 14 grob schematisch eine Ausführung der Anordnung in einer Kaffeemaschine;
Figur 15 grob schematisch eine Ausführung der Anordnung mit einer Entnahme des Inhalts von unten; und
Figur 16 grob schematisch eine Ausführung mit Entnahme des Inhalts durch Wasser oder Druckluft.

### Wege zur Ausführung der Erfindung

Nachfolgend werden Ausführungsbeispiele der Erfindung dargestellt, wobei in den Figuren gleiche Bezugszeichen für gleiche Elemente der verschiedenen Ausführungen verwendet werden. Teilweise wird die Anordnung zusammen mit einer Kapsel dargestellt, deren Inhalt mit der Anordnung von dem Verpackungsteil der Kapsel getrennt werden soll. Es kann sich dabei insbesondere um eine gemahlenen Kaffee enthaltende Kapsel handeln, welche unter der Marke Nespresso^{®} bekannt ist. Diese Kapsel weist eine Extraktionsseite auf, die von einer dünnen Folie gebildet ist, welche bei der Extraktion des Getränks teilweise zerstört wird. Die Anordnung eignet sich aber auch für andere Kapseln, bei denen eine Trennung von Kapselmaterial und Inhalt wünschenswert ist.

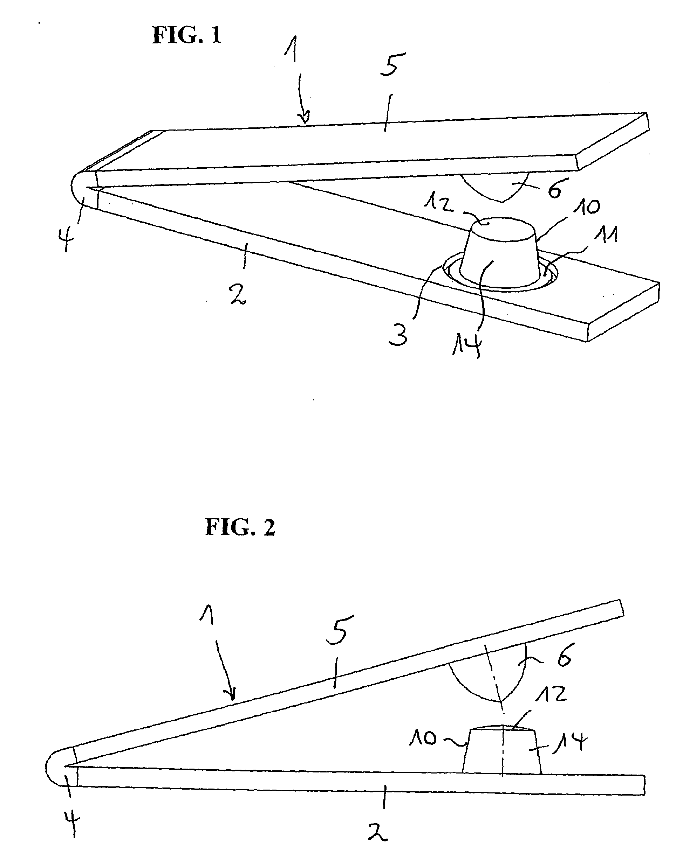

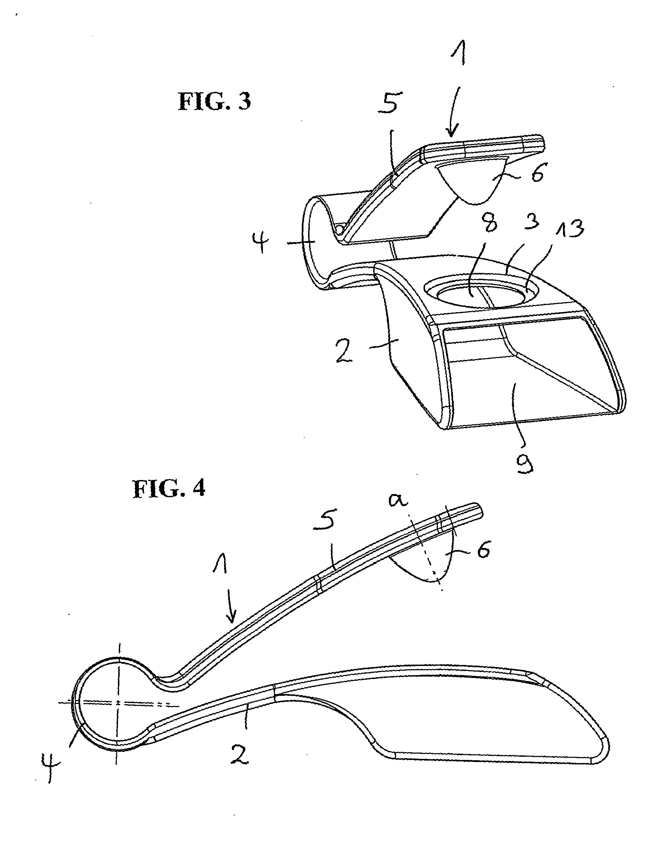

Die Figuren 1-4 zeigen erste Ausführungen einer Anordnung 1, bei welcher der Inhalt der Kapsel von der Verpackung dadurch getrennt wird, dass die Kapsel zusammengequetscht wird, wodurch der Inhalt, insbesondere der Kaffeesatz, aus der bereits gebrauchten Kapsel austritt. In Figur 1 ist ersichtlich, dass die Anordnung 1 eine Basis 2 aufweist, in welcher eine Aufnahme für die Kapsel 10 vorgesehen ist. Befindet sich die Kapsel in der Aufnahme 3 kommt sie über einer Öffnung zu liegen, welche den Austritt des Inhaltes ermöglicht, wenn die Kapsel zusammengequetscht wird. Dies wird nachfolgend anhand von Figur 3 noch näher erläutert. Die Kapsel 10 liegt dabei in der Regel derart in der Aufnahme, dass sie mit ihrer in der Figur nicht sichtbaren Extraktionsseite, durch welche das aus dem Inhalt extrahierte Produkt ausgeflossen ist, über der Öffnung zu liegen kommt. Die Quetschkraft wirkt dann vorzugsweise auf die der Extraktionsseite gegenüberliegende Seite 12 der Kapsel 10, welches im Falle der Nespresso^{®} -Kapsel diejenige Seite ist, über welche zur Extraktion Wasser in die Kapsel eingeführt wird.

In dem gezeigten Beispiel der Figuren 1 und 2 ist als Quetschmittel ein langgestrecktes Element 5 vorgesehen, welches als solches als ebenes, plattenförmiges Quetschmittel dienen könnte, welches aber bevorzugterweise einen speziell geformten Quetschkörper 6 trägt. Das Element 5 und die Basis 2 sind über ein Gelenk 4 miteinander verbunden und können insbesondere einstückig aus Kunststoff oder aus Metall ausgeführt sein. Zum Quetschen der Kapsel 10 wird das Element 5 von Hand in Richtung auf die Kapsel 10 geschwenkt und es wird eine Quetschkraft auf diese ausgeübt. Nach dem Quetschvorgang wird das Element 5 wieder nach oben geschwenkt. Dies kann alleine durch händische Betätigung durch die Bedienungsperson erfolgen, unterstützt durch die Rückstellkraft des Gelenks, wenn dieses entsprechend ausgebildet ist, und/oder es kann zusätzlich eine nicht dargestellte Rückstellfeder vorgesehen sein, welche das Element 5 wieder in die dargestellte Anfangsstellung bringt, in welcher die gequetschte Kapsel entnommen werden kann und in welcher eine weitere gebrauchte Kapsel in die Anordnung eingesetzt werden kann. Es könnten auch mehrere Aufnahmen für das gleichzeitige aber separate Trennen von mehreren Kapseln vorgesehen sein, insbesondere für zwei Kapseln.

Die Figuren 3 und 4 zeigen eine weitere Ausführungsform, bei welcher die Basis 2 selber einen Hohlraum unterhalb der Aufnahme 3 für die Kapsel bildet. In der vorhergehenden Ausführungsform war in der Basis 2 lediglich die Öffnung ausgebildet, so dass der aus der Kapsel ausgepresste bzw. ausgequetschte Kapselinhalt direkt nach unten aus der Basis ausgetreten ist. In der Ausführung gemäss den Figuren 3 und 4 tritt hingegen der Kapselinhalt durch die Öffnung 8 in den Aufnahmeraum 9 in der Basis 2 ein und kann dadurch leichter entsorgt werden. In den Figuren 3 und 4 ist die Kapsel 10 nicht dargestellt, was die Aufnahme 3 und die Öffnung 8 besser ersichtlich macht. Die Aufnahme 3 bildet eine Vertiefung mit einem Rand 13, auf welchem die Kapsel ebenfalls mit ihrem Rand aufliegt, welcher ein flanschartiger Rand 11 sein kann, wie in Figur 1 dargestellt. Auch die Ausführungsform der Figuren 3 und 4 weist ein oberes Element 5 als Quetschmittel auf, an welchem bevorzugt ein Quetschkörper 6 angeordnet ist. Das Gelenkteil 4 zwischen Basis und oberem Element 5 ist hier anders geformt und erzeugt eine Rückstellkraft für die Rückstellung des Elements 5 nach der Quetschbewegung in die gezeigte Grundstellung. Das gezeigte Gelenk eignet sich besonders für eine Herstellung der Anordnung aus Kunststoff. Die Funktion der gezeigten Anordnungen ist derart, dass die Kapsel 10, deren verbrauchter Inhalt bzw. deren Kaffeesatz von der restlichen Kapsel aus Metall getrennt werden soll, oberhalb der Öffnung 8 in der Aufnahme 3 platziert wird. Danach wird mit dem Quetschmittel 5, 6 auf die Seite 12 der Kapsel eine Quetschkraft ausgeübt, was die Kapsel aus Metall verformt und was dadurch das Austreten des Inhalts der Kapsel durch deren ohnehin bereits bei der Extraktion zerstörte bzw. geschwächte Extraktionsseite hindurch ergibt. Der Inhalt fällt damit durch die Öffnung 8 hindurch in den Raum 9 bzw. in den Figuren 1 und 2 in einen Bereich unterhalb der Basis 2.

In dem dargestellten Beispiel ist der Quetschkörper 6 Teil eines Rotationskörpers mit der Rotationsachse a (Figur 4). Dies ist eine bevorzugte Ausgestaltung, welche bei entsprechender (an die zu trennende Kapsel angepasste) Dimensionierung des Quetschkörpers dazu führt, dass die Kapselwand 12 in Richtung auf das Kapselinnere eingedrückt wird, während die Seitenwand 14 der Kapsel mindestens teilweise annähernd in ihrer bisherigen Form bestehen bleiben kann. Dennoch wird durch das Hineindrücken der Seite 12 der Kapsel deren Inhalt weitgehend aus der Kapsel 10 entfernt. Es lässt sich damit eine derart gute Trennung zwischen dem Metall der Kapsel und dem Kapselinhalt erzielen, dass der Metallteil ohne Probleme dem Metallrecycling zugeführt werden kann. Diese bevorzugte Art der Quetschung reduziert die dabei aufzuwendende Kraft im Vergleich mit einem vollständigen Zusammenquetschen der Kapsel. Auch mit dem Quetschkörper kann aber ein stärkeres Zusammendrücken bzw. Zerstören inklusive der Seitenwände erfolgen und auch ein im Wesentlichen vollständiges Zusammendrücken erfolgen.

In einer Ausführungsform kann der Raum 9 so ausgestaltet sein, dass er einen Behälter bildet, insbesondere einen mittels eines Deckels an der Vorderseite der Basis verschliessbaren Behälter. Die Öffnung 8 kann ebenfalls verschliessbar sein, z.B. indem das Quetschmittel durch eine Halterung so positioniert wird, dass es die Öffnung mindestens teilweise schliesst.

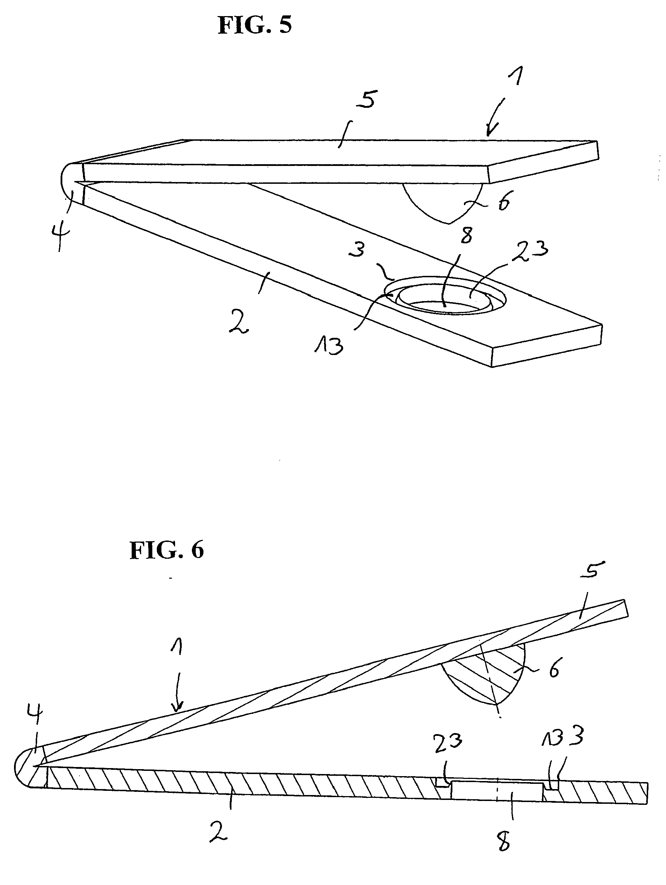

Die Figuren 5 und 6 zeigen ein weiteres Ausführungsbeispiel, bei welchem in der Aufnahme 3 ein Schneidmittel 23 vorgesehen ist, welches die Kapsel auf der Extraktionsseite einschneidet. Dies kann das Quetschen bzw. die Entleerung des Inhaltes verbessern. In dem Beispiel ist das Schneidmittel durchgehend kreisförmig gezeigt, so dass ein runder Teil der Kapsel vollständig abgeschnitten werden kann. Bevorzugt ist indes ein nur teilweise umlaufendes Schneidmittel, so dass der geschnittene Kapselteil mit dem Rest der Kapsel in Verbindung bleibt und mit dieser aus der Anordnung entnommen wird und nicht zusammen mit dem Inhalt durch die Öffnung 8 abgegeben wird.

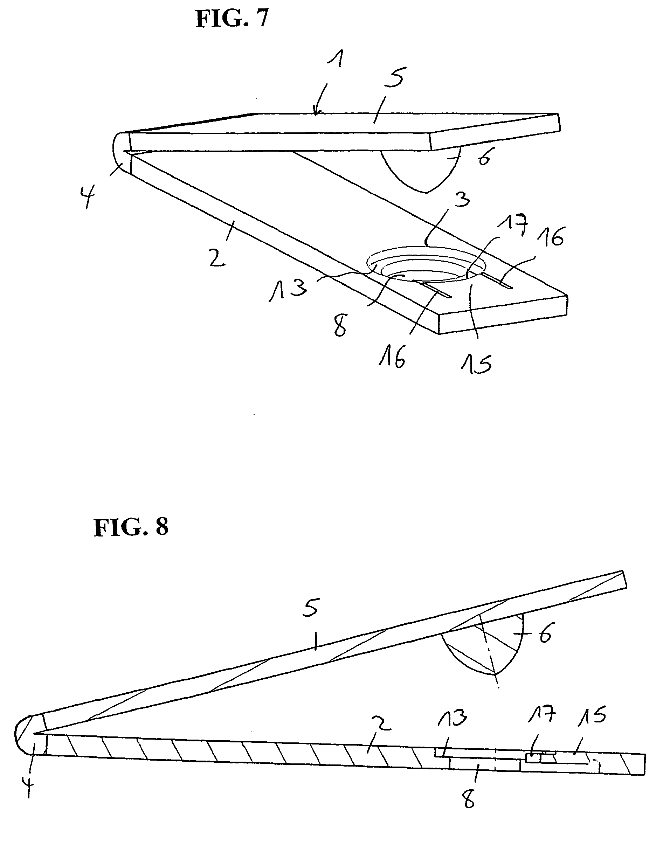

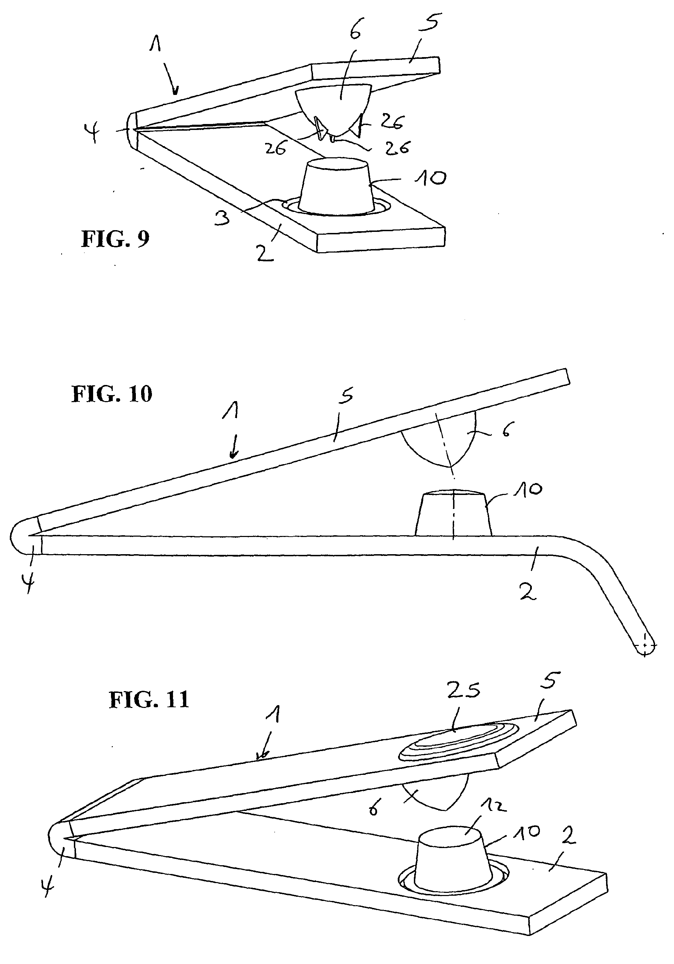

Die Figuren 7 und 8 zeigen ein Federmittel 15, welches im gezeigten Beispiel einstückig mit der Basis 2 ausgebildet ist und einen erhöhten Randteil 17 der Aufnahme 3 aufweist, welcher durch die Einschnitte 16 in der Basis federnd ausgeführt ist. Dieses Federmittel wirkt entgegen der Quetschkraft und sorgt nach der Beendigung des Quetschens dafür, dass die entleerte Kapsel wieder leicht aus der Aufnahme 3 abgehoben wird, was deren Herausnehmen aus der Aufnahme 3 erleichtert. Das Federmittel 15 kann mit dem vorbeschriebenen Schneidmittel 23 zusammen (kombiniert mit diesem oder separat) in einer Ausführung vorgesehen sein. Die Figur 9 zeigt eine Ausführungsform, bei welcher der Quetschkörper 6 Positionierungsmittel 26 aufweist, welche ein Verrutschen und Ausweichen der Kapsel 10 verhindern, wenn das Quetschmittel auf die Kapsel einwirkt. Die Positionierungsmittel 26 können auch das Quetschen fördern und bewirkten im gezeigten Beispiel insbesondere eine stärkere Quetschung auch der Seitenwand 14 der Kapsel.

Figur 10 zeigt eine weitere Ausführungsform, bei welcher die Basis 2 gekrümmt ausgebildet ist, so dass unterhalb der Öffnung 8 Platz für den Inhalt der Kapsel gebildet wird, wobei aber kein Aufnahmeraum 9 für diesen Inhalt vorgesehen ist.

Figur 11 zeigt eine weitere Ausführungsform, bei welcher ein Bedienungselement 25 an der Oberseite des Quetschmittels vorgesehen ist, welches die Bedienung erleichtern soll bzw. ein Abrutschen der Hand der Bedienungsperson beim Quetschen der Kapsel vermeiden soll.

Neben den gezeigten händischen Anordnungen zur Trennung der Kapsel und deren Inhalt können auch motorisch angetriebene Anordnungen vorgesehen sein und auch solche Anordnungen, welche die Trennung von Kapsel und Inhalt auf andere Weise als durch Quetschen der Kapsel erzielen. Solche Anordnungen können insbesondere auch in einer Kaffeemaschine vorgesehen sein.

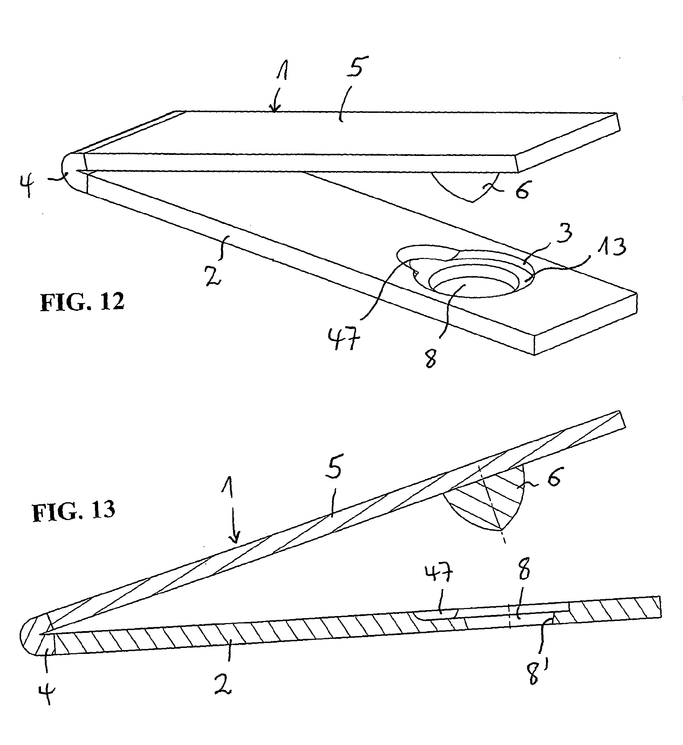

Figur 12 zeigt eine weitere Ausführung in schaubildlicher Ansicht, welche in Figur 13 in Schnittdarstellung gezeigt ist. Es ist dabei ersichtlich, dass die Seitenwand 8' der Öffnung 8 konisch verläuft und sich zur Kapsel bzw. zur Aufnahme 3 hin erweitert. Dies erleichtert die Entnahme der zerstörten Kapsel, die sich bei der Zerstörung teilweise in die Öffnung hinein verformt. Bevorzugt ist weiter eine Entnahmehilfe vorgesehen, welche die bereits geschilderte Entnahmehilfe mit Federmittel 15 - 17 sein kann. Anstelle oder zusätzlich zu dieser Ausführung der Entnahmehilfe kann diese in Form einer in die Aufnahme hinein reichender Ausnehmung 47 ausgeführt sein, welche das Greifen der zerstörten Kapsel erleichtert. Bei der gezeigten Ausführung mit über ein Gelenk verbundener Basis und Quetschmittel, ist die Ausnehmung 47 bevorzugt auf der zum Gelenk hin weisenden Seite der Aufnahme 3 angeordnet.

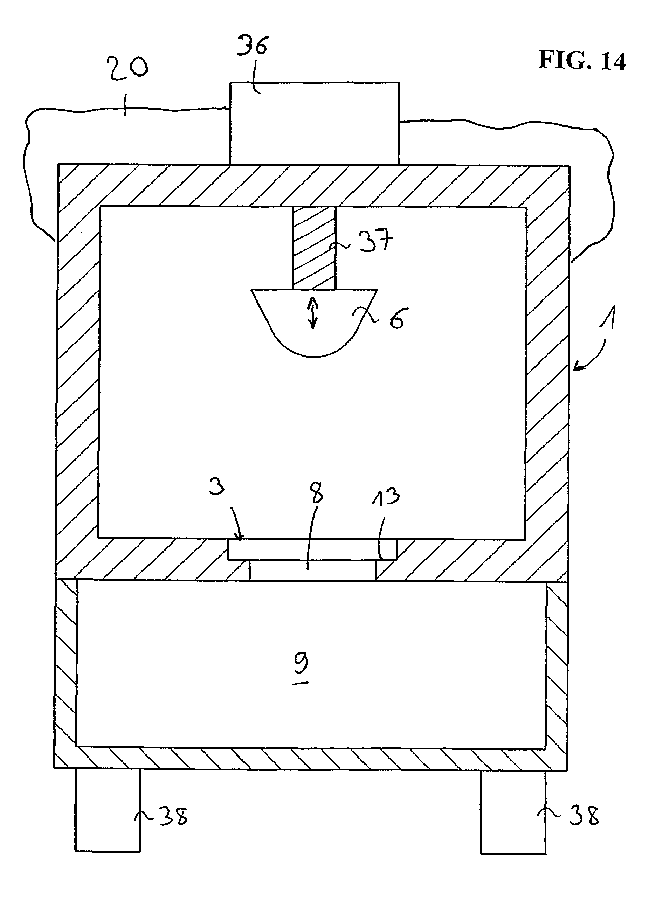

Figur 14 zeigt in grob schematischer Weise eine Ausführungsform, bei welcher die Anordnung in einer nicht näher dargestellten Kaffeemaschine 20 vorgesehen ist, von der lediglich ein Gehäuseteil angedeutet ist. Diese Anordnung weist wiederum eine Aufnahme 3 für die nicht dargestellte Kapsel auf. Die Anordnung kann so ausgestaltet sein, dass die gebrauchte Kapsel händisch in die Aufnahme 3 einzusetzen ist, nachdem die Kapsel aus der Kaffeemaschine entnommen worden ist. Die Anordnung kann aber auch mit dem Kapselausstoss der Kaffeemaschine derart zusammenwirken, dass die Kapsel nach der Extraktion des Kaffees direkt von der Kaffeemaschine in die Aufnahme 3 abgegeben wird. In dem gezeigten Beispiel ist nun als Quetschmittel ein Quetschkörper 6 vorgesehen, welcher von einem Motor 36 betrieben zum Quetschen der Kapsel nach unten verfahren wird, z.B. mittels einer Spindel 37, und nach dem Quetschen wieder nach oben verfahren wird. Auf diese Weise wird die Kapsel ähnlich der gezeigten händischen Ausführungen zusammengequetscht, hier indes durch eine Linearbewegung anstelle einer Schwenkbewegung des Quetschkörpers, was den Inhalt der Kapsel durch die Öffnung 8 in den Aufnahmeraum 9 hinauspresst. Die Trennung kann durch Mittel 38, welche die Anordnung 1 vibrieren lassen oder welche eine Schlagbewegung ausführen, zusätzlich verbessert werden.

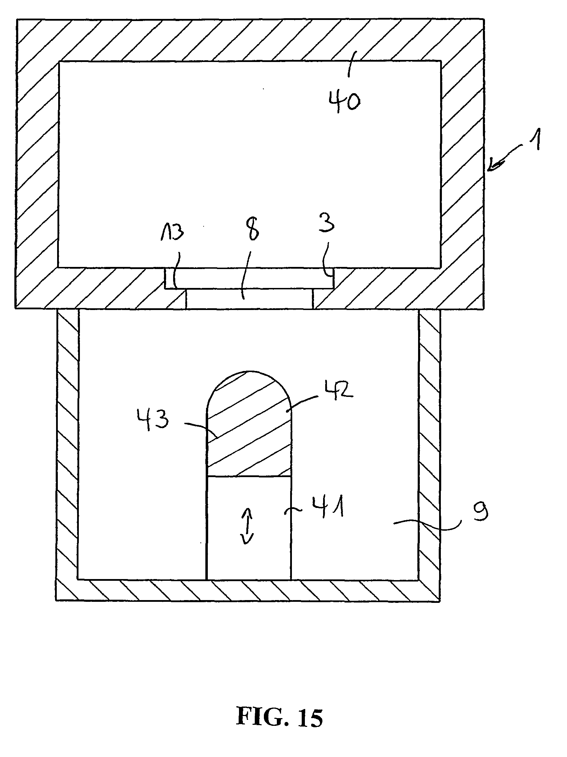

Figur 15 zeigt grobschematisch eine Ausführungsform der Anordnung 1, welche in einer Kaffeemaschine oder separat als selbständige Anordnung vorgesehen sein kann. Dabei ist die nicht dargestellte Kapsel wiederum in einer Aufnahme 3 angeordnet, wird dabei aber oberseitig, d.h. auf Seite der Wand 12 durch eine für die Trennung feststehende Begrenzung 40 festgehalten. Diese kann zum Einsetzen der Kapsel 10 in die Aufnahme wegnehmbar sein. Auch bei diesem Beispiel kann die Kapsel händisch eingesetzt werden oder wird von der Kaffeemaschine in die Aufnahme 3 gefördert. Zur Trennung des Inhalts der Kapsel von der Verpackung ist hier ein in Richtung des Pfeiles angetrieben verfahrbares Element 41 vorgesehen, welches zur Trennung des Inhalts der Kapsel einen Entnahmekörper 42 aufweist, der von der Extraktionsseite der Kapsel her in diese hineingedrückt wird. Der Inhalt kann dabei aus der Kapsel austreten und durch die Öffnung 8 in den Behälter 9 treten, wenn der Entnahmekörper 42 wieder aus der Kapsel herausgezogen wird. Es kann aber auch vorgesehen sein, dass der Entnahmekörper 42 um seine Längsachse drehbar angetrieben drehen kann und z.B. schraubenlinienförmig angeordnete Entnahmerippen 43 aufweisen kann, welche den Inhalt aus der Kapsel herausfördern. Auch hier können Vibrationsmittel oder Schlagmittel zusätzlich vorgesehen sein, welche das Trennen des Inhaltes von der Kapsel fördern.

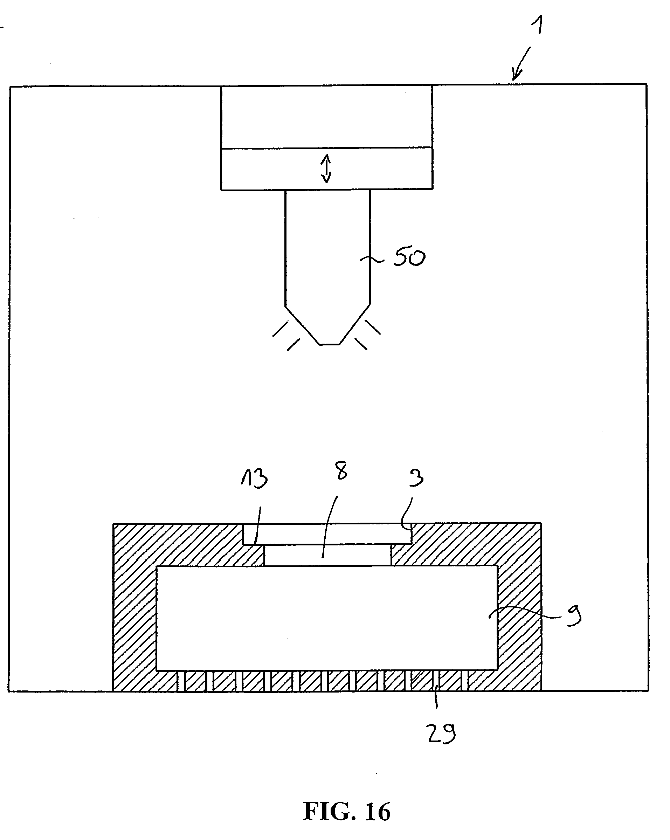

Figur 16 zeigt eine Ausführungsform, bei welcher die Kapsel wiederum in eine Aufnahme 3 gelangt, sei dies händisch oder direkt durch eine Kaffeemaschine, und wobei von oben her durch die Wand 12 der Kapsel ein Wasserzuführungsmittel 50 in die Kapsel eingeführt wird, und nachfolgend die Kapsel mit Wasser ausgespült wird. Insbesondere kann dabei das hier nicht dargestellte Schneidmittel 23 vorgesehen sein, welches die Kapsel extraktionsseitig aufschneidet. Das Gemisch aus Wasser und Inhalt gelangt dann in den Aufnahmeraum 9, welcher an seiner Unterseite mit Wasseraustrittsöffnungen 29 versehen ist, welche so gestaltet sind, dass aus diesen Wasser nach unten austreten kann, hingegen der Inhalt im Aufnahmeraum 9 verbleibt. Diese Ausführungsform wird bevorzugterweise in einer Kaffeemaschine angeordnet, in welcher eine Druckwasserversorgung vorgesehen ist. In einer Abwandlung dieser Ausführung kann auf die gezeigte Weise oder ähnliche Weise Luft in die Kapsel eingeblasen werden, um den Inhalt auszublasen oder es kann Luft aus der Kapsel angesaugt werden, um den Inhalt herauszusaugen.

## Patentansprüche

1. Anordnung (1), welche zur einzelstückweisen Trennung des Inhalts und des Verpackungsmaterials von verbrauchten Kapseln (10) zur Getränkeherstellung durch mindestens teilweise Zerstörung derselben bestimmt und ausgeführt ist, insbesondere durch Zusammendrücken oder Zusammenquetschen und/oder Aufschneiden und/oder Aufstechen wenigstens eines Teils der Kapsel.

2. Anordnung nach Anspruch 1, welche dazu bestimmt ist, dass die Kapsel über einer Öffnung (8) der Anordnung durch ein Quetschmittel (5,6,36,37) derselben derart zusammenquetschbar ist, dass mindestens ein Teil des Inhalts der Kapsel aus dieser austritt und durch die Öffnung hindurchfällt.

3. Anordnung nach Anspruch 2, umfassend eine Basis (2), welche eine Aufnahme (3) aufweist, die zum Halten der Kapsel in vorbestimmter Position über der Öffnung bestimmt ist, sowie ein oberhalb der Basis angeordnetes Quetschmittel (5,6,36,37), durch welches die Quetschkraft auf eine auf der Basis in Position befindliche Kapsel ausübbar ist.

4. Anordnung nach Anspruch 3, wobei die Aufnahme (3) zum Halten der Kapsel nur entlang von deren Rand (11) bestimmt und ausgeführt ist.

5. Anordnung nach Anspruch 3 oder 4, wobei das Quetschmittel um eine Schwenkachse schwenkbar angeordnet ist und insbesondere schwenkbar an der Basis angeordnet ist.

6. Anordnung nach Anspruch 5, wobei das Quetschmittel an einem einstückig mit der Basis gebildeten Element (5) angeordnet oder von diesem gebildet ist.

7. Anordnung nach einem der Ansprüche 2 bis 6, wobei das Quetschmittel einen Quetschkörper (6) aufweist, welcher dazu bestimmt ist, eine vorbestimmte Verformung der Kapsel bei der Quetschung zu erzeugen, und insbesondere einen Quetschkörper aufweist, der im Wesentlichen aus einem Teil eines Rotationskörpers gebildet ist, insbesondere im Wesentlichen ein Teil eines Paraboloids ist, welcher insbesondere dazu bestimmt ist, eine rundliche Vertiefung in die Kapsel zu quetschen, und insbesondere dazu bestimmt ist, eine kraterförmige Vertiefung in der Kapsel (10) zu bilden, wobei deren Seitenwand (14) als Kraterwand teilweise unverformt bleibt.

8. Anordnung nach einem der Ansprüche 2 bis 7, wobei an der Basis und insbesondere an der Aufnahme ein Schneidmittel (23) vorgesehen ist, welches zur Bildung eines teilweisen oder gänzlich umlaufenden Schnittes in der Kapsel bestimmt ist.

9. Anordnung nach einem der Ansprüche 3 bis 8 umfassend eine Entnahmehilfe (15, 16, 17; 47), welche zum Ausstossen der gequetschten Kapsel aus der Aufnahme bestimmt ist oder welche als Ausnehmung (47) einen erleichterten Zugriff auf die Kapsel ermöglicht.

10. Anordnung nach einem der Ansprüche 5 bis 9, wobei ein der Schwenkbewegung entgegenwirkendes Federmittel vorgesehen ist.

11. Anordnung nach einem der Ansprüche 3 bis 10, wobei das Quetschmittel mindestens ein Positionierungselement (26) aufweist, welches dazu bestimmt ist, die Position von Kapsel und Quetschmittel zu Beginn der Quetschung aneinander anzupassen.

12. Anordnung nach einem der Ansprüche 1 bis 11, umfassend einen Behälter (9) zur Aufnahme des von der Verpackung getrennten Inhalts.

13. Anordnung nach einem der Ansprüche 2 bis 12, wobei diese eine Stellfläche zur Positionierung auf einer Unterlage aufweist und wobei die Öffnung beabstandet von der Stellfläche angeordnet ist, insbesondere unter Bildung eines Auffangraums (9), insbesondere des Behälters, zur Aufnahme des Inhaltes mindestens einer Kapsel, wobei der Behälter insbesondere als verschliessbarerer Behälter ausgeführt ist

14. Anordnung nach einem der Ansprüche 2 bis 13 umfassend ein Betätigungsmittel zur Erzeugung der Quetschkraft von Hand oder ein motorisches Betätigungsmittel (36,37) zur Erzeugung der Quetschkraft.

15. Anordnung nach Anspruch 1, welche derart ausgestaltet ist, dass die Trennung durch ein Herausziehen des Inhalts mittels eines schraubenförmigen Fördermittels und/oder durch ein Schlag- oder Vibrationsmittel oder durch ein Spülmittel zum Herausspülen des Inhalts durch Wasser oder durch ein Blas- und/oder Saugmittel bewirkbar ist.

16. Anordnung nach einem der Ansprüche 1 bis 15, wobei diese in einer Kaffeemaschine (20) angeordnet ist, welche zur Kaffeeherstellung mittels von in Kapseln verpacktem Kaffee bestimmt ist.

17. Kaffeemaschine zur Extraktion von Kaffee aus Kaffee enthaltenden Kapseln mit einer Anordnung nach einem der Ansprüche 1 bis 15.

18. Verwendung einer Presse (1), umfassend eine Basis (2), welche eine Aufnahme (3) aufweist, die zum Halten eines Gegenstandes (10) in vorbestimmter Position über einer Öffnung (8) in der Aufnahme bestimmt ist, sowie ein oberhalb der Basis angeordnetes Quetschmittel (5,6) aufweist, durch welches eine Quetschkraft auf einen auf der Basis in Position befindlichen Gegenstand ausübbar ist, zur Trennung des Inhalts und des Verpackungsmaterials von verbrauchten Kapseln zur Getränkeherstellung, insbesondere von verbrauchten Kapseln zur Kaffeeherstellung, welche einen Kapselkörper aus Metall, insbesondere Aluminium, aufweisen, insbesondere, indem die Presse zur Aufnahme der Extraktionsseite der Kapsel in der Aufnahme und zur Ausübung der Quetschkraft auf die gegenüberliegende Seite (12) der Kapsel ausgestaltet ist.

19. Verwendung nach Anspruch 18, wobei die Aufnahme zum Halten der Kapsel nur entlang von deren Rand (11) bestimmt und ausgeführt ist, und wobei insbesondere das Quetschmittel um eine Schwenkachse schwenkbar angeordnet ist und insbesondere schwenkbar an der Basis angeordnet ist, und wobei insbesondere das Quetschmittel an einem einstückig mit der Basis gebildeten Arm angeordnet ist und insbesondere einstückig mit dem Arm ausgebildet ist und wobei insbesondere das Quetschmittel einen Quetschkörper aufweist, welcher dazu bestimmt ist, eine vorbestimmte Verformung der Kapsel bei der Quetschung zu erzeugen, und insbesondere einen Quetschkörper aufweist, welcher dazu bestimmt ist, eine rundliche Vertiefung in die Kapsel zu quetschen, und insbesondere welcher dazu bestimmt ist, eine kraterförmige Vertiefung in der Kapsel zu bilden, wobei deren Seitenwände als Kraterwände teilweise unverformt bleiben.

20. Verwendung nach Anspruch 18 oder 19, wobei an der Basis und insbesondere an der Aufnahme ein Schneidmittel (23) vorgesehen ist, welches zur Bildung eines teilweisen oder gänzlich umlaufenden Schnittes in der Kapsel bestimmt ist, und wobei insbesondere eine Entnahmehilfe für die gequetschte Kapsel als Ausstosselement, welches zum Ausstossen der gequetschten Kapsel aus der Aufnahme bestimmt ist, oder als Ausnehmung (47) vorgesehen ist, und wobei insbesondere am Quetschmittel mindestens ein Positionierungselement vorgesehen ist, welches dazu bestimmt ist, die Position von Kapsel und Quetschmittel zu Beginn der Quetschung aneinander anzupassen.

21. Verwendung nach einem der Ansprüche 18 bis 20, wobei die Presse einen Behälter zur Aufnahme des von der Verpackung getrennten Inhalts umfasst und insbesondere eine Stellfläche zur Positionierung auf einer Unterlage aufweist, wobei die Öffnung beabstandet von der Stellfläche angeordnet ist, insbesondere unter Bildung eines Auffangraums, insbesondere des genannten Behälters, welcher insbesondere verschliessbar ist, zur Aufnahme des Inhaltes mindestens einer Kapsel.

22. Verfahren zur Trennung des Inhalts und des Verpackungsmaterials von gebrauchten Kapseln zur Getränkeherstellung, insbesondere Kaffee enthaltenden Kapseln aus Metall, bei welchem die Kapsel einzeln mit ihrer Extraktionsseite über einer Öffnung positioniert und mindestens teilweise zerstört wird, und insbesondere durch ein Quetschmittel von der Wassereintrittsseite der Kapsel her beaufschlagt und zusammengedrückt wird, so dass mindestens ein Teil des Inhalts der Kapsel aus dieser austritt und durch die Öffnung hindurchfällt.

23. Verfahren nach Anspruch 22, wobei die Kapsel in einer Aufnahme im Wesentlichen nur entlang von deren Rand über der Öffnung abgestützt wird.

24. Verfahren nach einem der Ansprüche 22 oder 23, wobei das Zusammendrücken mit einem Quetschkörper erfolgt, welcher dazu bestimmt ist, eine vorbestimmte Verformung der Kapsel bei der Quetschung zu erzeugen, und insbesondere derart, dass an der Wassereintrittsseite der Kapsel in dieser eine rundliche Vertiefung eingepresst wird, insbesondere als eine kraterförmige Vertiefung in der Kapsel, deren Seitenwände als Kraterwände teilweise unverformt bleiben.

25. Verfahren nach einem der Ansprüche 22 bis 24, wobei an der Extraktionsseite der Kapsel vor dem Quetschen ein teilweise oder gänzlich umlaufender Schnitt in der Verschlussfolie der Kapsel erzeugt wird.

26. Verfahren zur Trennung des Inhalts und des Verpackungsmaterials von verbrauchten Kapseln zur Getränkeherstellung, insbesondere Kaffee enthaltenden Kapseln aus Metall, bei welchem die einzelne Kapsel mit ihrer Extraktionsseite über einer Öffnung positioniert und die Trennung durch ein Herausziehen des Inhalts mittels eines Fördermittels und/oder durch ein Schlag- oder Vibrationsmittel oder durch ein Spülmittel zum Herausspülen des Inhalts durch Wasser oder durch ein Blas- und/oder Saugmittel vorgenommen wird.
